# EUROPÄISCHE PATENTSCHRIFT

(11) **EP 0 974 819 B1**
(45) Veröffentlichungstag und Bekanntmachung des Hinweises auf die Patenterteilung: **30.11.2005**
(21) Anmeldenummer: 99250183.3
(22) Anmeldetag: 11.06.1999
(51) Int. Cl.: G01G 19/414, G07B 17/00

(54) **Vorrichtung zum Wiegen von bewegtem Postgut**
Device for weighing moving mail
Dispositif pour le pesage de courrier en mouvement

(30) Priorität: 17.07.1998 DE 19833767
(43) Veröffentlichungstag der Anmeldung: 26.01.2000
(73) Patentinhaber: Francotyp-Postalia AG & Co. KG, 16547 Birkenwerder (DE)
(72) Erfinder: Hübler, Uwe, 12627 Berlin (DE); Müller, Carsten, 73527 Schwäbisch-Gmünd (DE); Schmidt-Kretschmer, Michael, Dr., 16565 Lehnitz (DE)

(56) Entgegenhaltungen:
- EP-A- 0 787 586
- DE-A- 2 703 899
- DE-A- 3 709 564
- DE-C- 19 605 014
- DE-C- 19 605 015

## Beschreibung

Die Erfindung betrifft eine Vorrichtung zum Wiegen von bewegtem Postgut, insbesondere von auf einer Kante stehend angeordneten Briefen.
Postverarbeitungssysteme bestehen üblicherweise aus einer Postgutvereinzelungsvorrichtung, einer Waage, einer Frankiermaschine und einer Ablagevorrichtung, siehe DE 27 17 721 A1 und DE 37 31 525 C2. Die Waage kann dabei auch in die Frankiermaschine integriert sein, siehe DE-M 96 09 167.3 in Geschmacksmusterblatt des Deutschen Patentamtes vom 24.05.1997, Teil la, Warenklasse 18/02.
Der Gewichtsbereich der zu wiegenden Lasten beträgt üblicherweise 3 bis 1000g bei einer Lastdicke zwischen 0,5 bis 20 mm.
In der Vereinzelungsvorrichtung wird das Postgut - im weiteren abkürzungshalber "Brief" - stapelweise angelegt, vereinzelt und bedarfsweise verschlossen.

In der Frankier- und/oder Adressiermaschine werden die Briefe entsprechend dem ermittelten Gewicht und der vorgegebenen Adresse bedruckt.
Bei einer bekannten Frankier- und/oder Adressiermaschine, vergleiche DE 196 05 014 C1 und DE 196 05 015 C1, werden die Briefe auf einer Kante stehend kontinuierlich an einer Druckeinrichtung vorbeigeleitet. Die Druckeinrichtung ist während des Druckvorganges fest positioniert. Das Wiegeproblem bleibt hierbei unberührt.

Es ist eine Waage bekannt, siehe DE-M 296 01 418 U1, die insbesondere zum Wiegen von Poststücken vorgesehen ist. Mit dieser Waage werden die Briefe auf einer Kante stehend gewogen.
Die Waagschale weist eine Mulde und eine aufrechte Stützfläche auf. Der Brief steht mit einer Kante in der Mulde und liegt mit einer Seitenfläche an der Stützfläche an.
Die Waage ist mit Lagermitteln zur federnden Lagerung der Waagschale derart versehen, daß dieselbe vertikal in einem Maß abwärts bewegt wird, das mit dem Gewicht der Last auf der Waagschale ansteigt. Die Waage ist weiterhin mit Wandlermitteln versehen, die entsprechend der vertikalen Abwärtsbewegung ein elektrisches Signal erzeugen, das wiederum dem Lastgewicht entspricht.
Die Waagschale ist in der horizontalen Erstreckung so kurz gestaltet, daß der Brief ungefähr mittig aufliegen muß, um nicht herunterzufallen. Auf diese Weise wird erreicht, daß sich der Schwerpunkt der Last annähernd in der Vertikalen über den Lagermitteln befindet und demzufolge durch die Last keine bedeutende Verkantungskraft auf die Waagschale ausgeübt wird. Die Höhe des Lastschwerpunktes hat bei dieser Lage dann gleichfalls keine Auswirkungen auf das Meßergebnis.
Zum Wiegen von Lasten bei hoher Transportgeschwindigkeit ist jedoch eine Waagschale erforderlich, deren horizontale Länge mindestens gleich ist der maximalen Ausdehnung, die die zu wiegenden Last in Transportrichtung aufweist.
Wie dem Vorbeschriebenen zu entnehmen ist, ist diese Anordnung nur zum Wiegen von ruhenden Lasten geeignet und der Wiegerfolg von der Sorgfalt der Bedienperson abhängig.

Bei dem eingangs genannten Frankiersystem gemäß DE 37 31 525 C2 werden die Briefe flach liegend mittels Transportriemen befördert. Die Waage ist zwischen der Briefvereinzelungseinrichtung und der Frankiermaschine angeordnet und über eine Transportsteuerung so mit den Nachbargeräten verknüpft, daß der Brieftransport für den Wiegeprozeß unterbrochen wird.
Die Wiegezeit ist so bemessen, daß ein stabiler Wiegezustand eintritt. Dabei wird von dem empirisch ermittelten Wert ausgegangen, daß ein stabiler Wiegezustand erreicht ist, wenn drei aufeinanderfolgende Zählsignale der Last- beziehungsweise Wiegezelle innerhalb eines vorbestimmten Bandes erfaßt werden.
Bei einer bevorzugten Ausführungsform ist die Lastzelle zu Verminderung von Torsionsbelastungen so auf einer Basis befestigt, daß die horizontale Mittellinie der Lastzelle im wesentlichen mit der Oberfläche der Transportriemen ausgerichtet ist. Drei parallel angeordnete Transportriemen bilden eine Transporteinrichtung, die in einem langgestreckten u-förmigen Profilstück gelagert ist, das mit einer Seitenwand an die Lastzelle angeflanscht ist. Als Überlastschutz sind unter dem Profilstück Anschläge angeordnet.
Diese Anordnung weist durch die Ausführung mit drei Transportriemen und den zugehörenden Antriebs- und Umlenkwalzen eine relativ große Masse auf. Hinzu kommt noch die Masse des Profilstückes, das zur Gewährleistung einer Mindeststeifigkeit eine entsprechende Wanddicke haben muß. Eine große Gesamtmasse - erfahrungsgemäß von einem Mehrfachen des maximalen Briefgewichts - hat eine entsprechend niedrige Eigenfrequenz. Das Quadrat der Eigenfrequenz ist bekanntermaßen umgekehrt proportional zur Masse und proportional zur Steifigkeit eines Körpers. Je niedriger aber die Eigenfrequenz ist, desto länger ist die benötigte Wiegezeit und demzufolge die Transportzeit über die Waage, wenn annähernd eine gleiche Genauigkeit der Wiegergebnisse eingehalten werden soll.
Die Art und Weise der Ankopplung des Profilstückes mit der Transporteinrichtung bedingt querab ein Biegemoment, das die Wahl der Lastzelle entsprechend einschränkt.

In der gleichfalls eingangs genannten Lösung gemäß DE 27 17 721 A1 werden die Briefe analog zur vorherigen Anordnung flach liegend mittels einer Transporteinrichtung aus mehreren parallel laufenden Bändern über eine elektronische Waage geleitet. Gewogen wird während des Transports, das heißt, es handelt sich hierbei um eine sogenannte "dynamische Waage". Die Transportgeschwindigkeit und die Länge des Transportweges sind dabei so bemessen, daß die notwendige Einspielzeit der Waage eingehalten wird, bis der jeweilige Brief den Wiegebereich wieder verläßt.
Auch hier weist die Transporteinrichtung eine niedrige Eigenfrequenz auf. Das bedingt eine entsprechend lange Wiegeschale und eine niedrige Transportgeschwindigkeit und/oder eine Herabsetzung der oberen Wiegegrenze.

Beide vorstehend beschriebene Waagen sind speziell für einen flach liegenden Transport der Briefe konzipiert. Eine Verwendung der bisherigen Transporteinrichtung für den senkrechten Brieftransport ist mit einem weiteren Nachteil einer größeren Meßungenauigkeit verbunden, da hierbei der Masseschwerpunkt der Briefe wesentlich weiter von der Lastzelle entfernt und demzufolge der Lastarm größer ist.

Zweck der Erfindung ist eine Verbesserung der Funktionseigenschaften und eine Vergrößerung des Einsatzbereiches bei minimalem Aufwand.

Der Erfindung liegt die Aufgabe zugrunde, eine Vorrichtung zum Wiegen von auf einer Kante stehend angeordneten, durchgängig bewegten Briefen überhaupt zu schaffen und mit der es darüber hinaus möglich ist, bei großer Transportgeschwindigkeit und über einen breiten Gewichtsbereich eine hohe Meßgenauigkeit zu erzielen.

Erfindungsgemäß wird diese Aufgabe gemäß dem Anspruch 1 gelöst. Weitere vorteilhafte Merkmale sind aus den abhängigen Ansprüchen zu entnehmen.
Die Ankopplung des Wiegetellers an den beweglichen Teil der Meßzelle in dem Bereich des gemeinsamen Schwerpunktes von Wiegeteller und der auf diesem ungefähr mittig angeordneten größten zulässigen Last mit maximal möglichen Abmessungen bewirkt, daß die negativen Auswirkungen des Lastarmes minimiert werden.
Die Ausführung des Wiegetellers in biege- und verwindungsteifer Leichtbauweise senkt dessen Masse unter Beibehaltung einer hohen Steifigkeit, so daß eine höhere Eigenfrequenz und infolgedessen kurze Einschwingzeiten für das gesamte Meßsystem erreicht werden. In höheren Frequenzbereichen können Resonanzfrequenzen leichter herausgefiltert werden. Das wiederum gestattet eine entsprechend große Brieftransportgeschwindigkeit.

Bei der skelettförmigen Ausführung der Rückwand des Wiegetellers wird der Sachverhalt ausgenutzt, daß der maximale Hub des Wiegetellers im Mikrometerbereich liegt, demzufolge die mit dem Postgut in Berührung kommenden Teile der Rückwand durch entsprechend schmale schlitzförmige Ausnehmungen in der hinteren Führungswand der Waage ragen können. Das ermöglicht eine weitere Senkung der Masse des Wiegetellers unter Beibehaltung einer hohen Steifigkeit. Da die Rückwand des Wiegetellers überwiegend durch die hintere Führungswand der Waage verdeckt ist, werden mögliche störende äußere Einflüsse, beispielsweise durch Luftzug, auf die Rückwand verhindert.
Indem der Eingangsbereich der Waage so gestaltet ist, daß der Brief tangential an die untere und die hintere sowie die vordere Stützfläche des Wiegetellers herangeführt wird, werden in diesem Bereich störende Impulse auf die Wiegezelle weitgehend vermieden, die das Meßergebnis verfälschen können. Offene Briefe können sich mit ihren Umschlagklappen nicht am Eingang verhaken.
Entsprechend ist der Ausgangsbereich der Waage so gestaltet, daß der Brief den dem Wiegeteller folgenden Bereich erst nach Abschluß des Wiegeprozesses berührt. Die überstehende Anordung der Transportfläche und der hinteren Stützfläche im Wiegetellerbereich gegenüber der nachfolgenden Transport- und Stützfläche ermöglicht eine Verkürzung des Wiegetellers ohne entsprechende Einschränkung der Meßzeit. Ein kürzerer Wiegeteller unterstützt außerdem die Bemühungen um Masseeinsparungen und damit um die Steigerung der Eigenfrequenz.

Die Erfindung wird nachstehend an zwei Ausführungsbeispielen näher erläutert.
Es zeigen:
- Fig. 1: Eine perspektivische Ansicht einer Waage mit der erfindungsgemäßen Vorrichtung von vorn rechts oben,
- Fig. 2: ein Prinzipbild zur Gestaltung des Brieftransports in der Waage,
a) ohne weitere Hilfsmittel im Eingangsbereich,
b) mit Gleitfeder im Eingangsbereich,
- Fig. 3: eine perspektivische Ansicht der erfindungsgemäßen Vorrichtung gemäß Fig. 1 von vorn rechts oben,
- Fig. 4: eine Rückansicht der erfindungsgemäßen Vorrichtung gemäß Fig. 3,
- Fig. 5: eine Seitenansicht der erfindungsgemäßen Vorrichtung gemäß Fig.3 von rechts,
- Fig. 6: eine perspektivische Ansicht einer Waage, bei der die Rückwand des Wiegetellers überwiegend hinter der Führungswand der Waage angeordnet ist, von vorn rechts oben,
- Fig. 7: eine perspektivische Ansicht der hinteren Führungswand der Waage mit dem Wiegeteller nach Fig. 6 von vorn rechts oben,
- Fig. 8: eine perspektivische Ansicht der hinteren Führungswand der Waage mit dem Wiegeteller gemäß Fig. 6 von hinten rechts oben,
- Fig. 9: eine perspektivische Ansicht der Rückwand des Wiegetellers gemäß Fig. 6 von vorn rechts oben,
- Fig. 10: eine teilweise Seitenansicht der Waage nach Fig. 6 von rechts,
- Fig. 11: charakteristische Meßlagen des Briefes auf dem Wiegeteller,
a) Vorderansicht mit Brief im Einlaufbereich,
b) Seiten- und Vorderansicht mit Brief im Mittelteil,
c) Vorderansicht mit Brief im Auslaufbereich,
- Fig. 12: ein Zeitdiagramm über das Einschwingen der Waage während des maximal zulässigen Meßbereiches.

Zur Vereinfachung und zum leichteren Verständnis ist die Darstellung teilweise schematisiert ausgeführt.

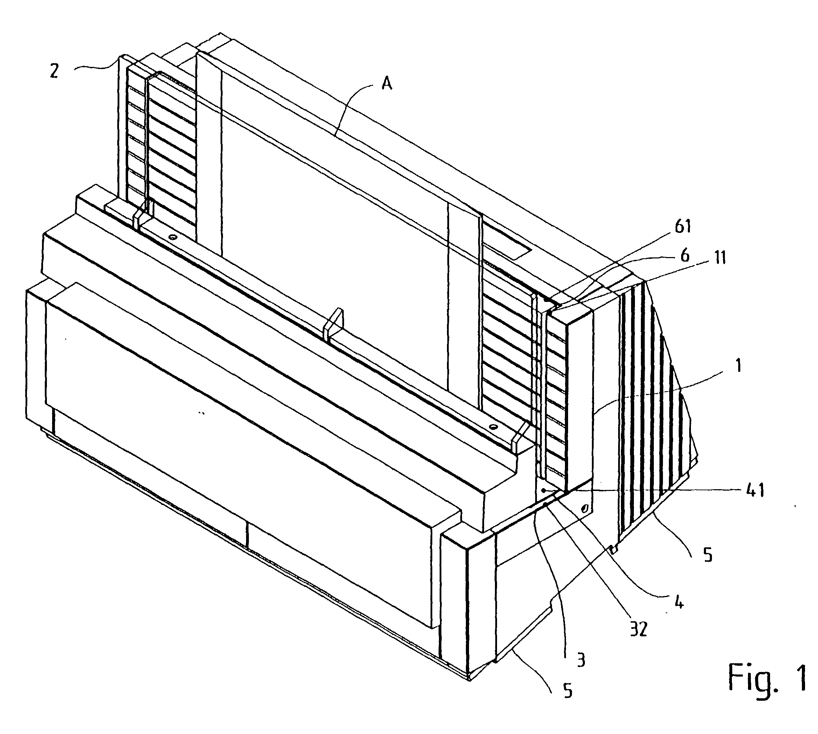

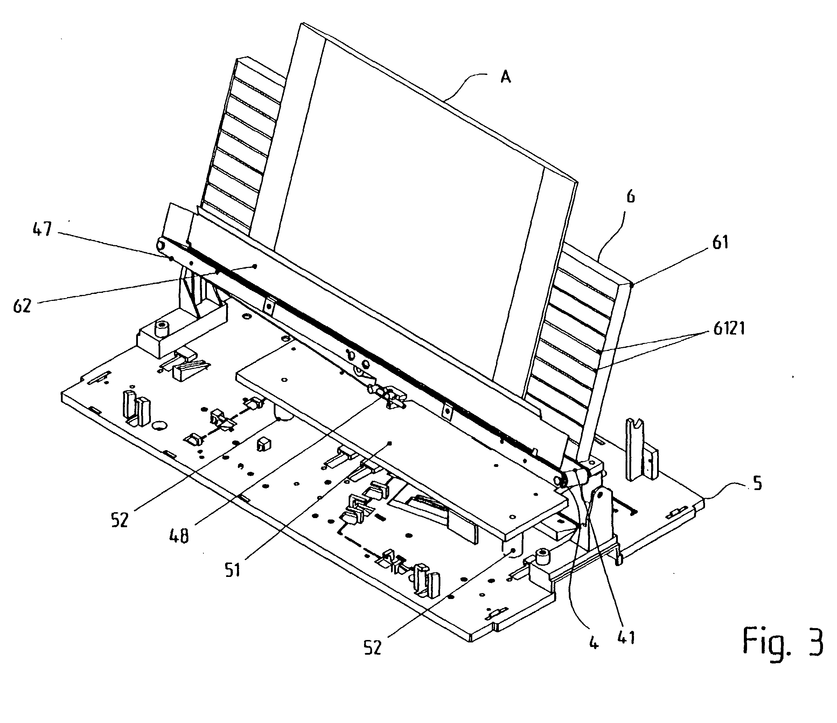

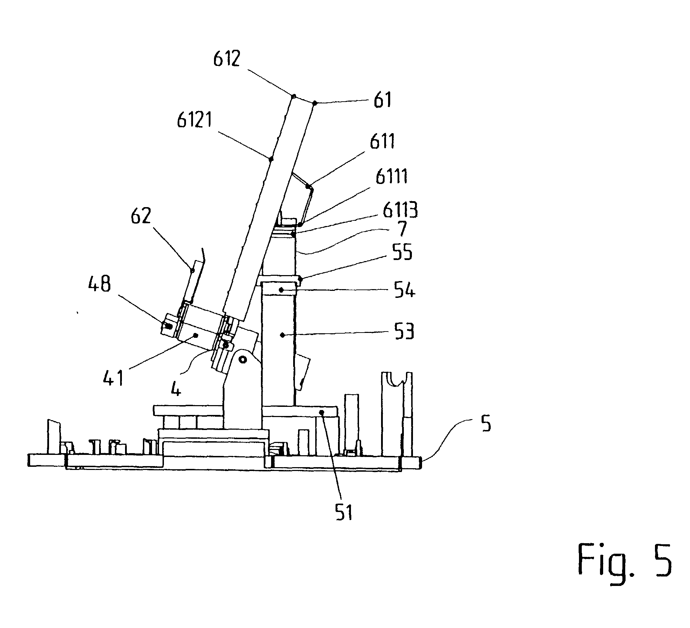

Gemäß Fig. 1 ist ein Brief A auf einem Transportriemen 41 einer Transporteinrichtung 4 auf einer Kante stehend und anliegend an der Rückwand 61 eines Wiegetellers 6 angeordnet. Die Rückwand 61 ist in eine angepaßte Ausnehmung 11 der hinteren Führungswand 1 der Waage so eingelassen, daß die Rückwand 61 freigängig, parallel zur Führungswand 1 und gegenüber deren Vorderseite geringfügig vorstehend ist. Die Vorderkante der Rückwand 61 ist im Einlaufbereich bis unter das Niveau der Vorderseite der Führungswand 1 abgeschrägt.
Die Transporteinrichtung 4 bildet den Boden des u-förmig gestalteten Wiegetellers 6, dessen Vorderwand 62 im Vergleich zur tragenden parallelen Rückwand 61 niedriger ist, siehe auch Fig. 3 und 5.
Die Vorderwand 62 ist im Eingangsbereich leicht nach vorn gebogen und so hoch, daß die Umschlagklappe eines offenen Briefes A ohne Stoß auf die Vorderwand auftrifft und nur an dieser anliegen kann. Außerdem wird dadurch der Brief A mit seiner Briefunterkante sicher geführt und kann nicht vom Transportriemen 41 abrutschen.
Vor der Vorderwand 62 des Wiegetellers 6 ist parallel und mit geringem Abstand zu dieser eine vordere Abdeckplatte 2 - vorzugsweise aus Plexiglas - in der Waage vorgesehen, die gemeinsam mit der hinteren Führungswand 1 auf einer unteren Führungswand 3 aufgesetzt ist.
Die Abdeckplatte 2 verhindert einerseits den Zugriff zum Brief A während des Transport- und Wiegevorganges und verringert den Einfluß von Luftbewegungen auf den Brief A, die zu negativen Beeinflussungen des Meßergebnisses führen können.
Der Transportriemen 41 ist so breit bemessen, daß ein Brief A mit der größten zugelassenen Dicke, beispielsweise 20 mm, so viel Platz hat, daß dieser bei Anlage an der Rückwand 61 des Wiegetellers 6 die vordere Abdeckplatte 2 der Waage nicht berührt. Damit werden Verfälschungen des Meßergebnisses durch Reibung vermieden.
Die hintere Führungswand 1 ist leicht nach hinten geneigt, vorzugsweise um 18° über die Senkrechte hinaus.
Das entspricht einem bereits für eine automatische Briefzuführung und eine Frankiermaschine ermittelten Optimierungswinkel, vergleiche auch DE 196 05 014 C1 und DE 196 05 015 C1.
Die untere Führungswand 3 ist zur hinteren und demzufolge auch zur vorderen Abdeckplatte 2 orthogonal angeordnet. Damit wird eine definierte Brieflage und eine harmonische Anpassung an vor- und nachgeordnete Geräte erreicht.
Alle genannten Baugruppen beziehungsweise Teile sind über entsprechende Zwischenstücke auf einem Chassis 5 befestigt.

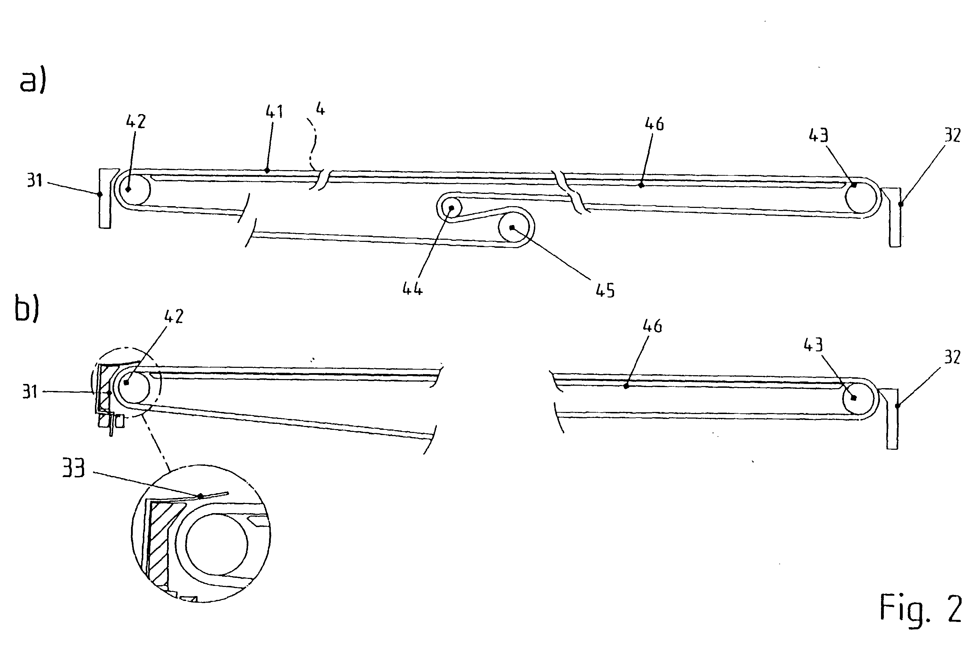

Gemäß Fig. 2 ist das Vorderende 31 der unteren Führungswand 3 im Eingangsbereich der Waage so gestaltet, daß der Brief A annähernd tangential auf den Transportriemen 41 aufsetzt. Das Hinterende 32 der unteren Führungswand 3 im Ausgangsbereich der Waage ist so gestaltet, daß der Brief A beim des Verlassen des Transportriemens 41 zunächst frei liegt. Zu diesem Zweck ist die Oberseite des Hinterendes 32 der unteren Führungswand 3 niedriger angeordnet als das Niveau der Oberseite des Transportriemens 41.
Bei einer ersten Ausführung gemäß Fig. 2a ist die Oberseite des Vorderendes 31 der unteren Führungswand 3 niveaugleich zur Oberseite des Transportriemens 41 angeordnet.
Bei einer zweiten Ausführung gemäß Fig. 2b ist an dem Vorderende 31 eine dünne weiche Blattfeder 33 so befestigt, daß dieselbe unter der Brieflast niveaugleich auf der Oberseite des Vorderendes 31 und des ersten Teils des Transportriemens 41 aufliegt.
Wie Fig. 2a außerdem zeigt, weist die Transporteinrichtung 4 neben dem Transportriemen 41 eine vordere und eine hintere Umlenkrolle 42, 43 und eine Antriebsrolle 44 nebst Spannrolle 45 für den Transportriemen 41 auf. Die Spannrolle 45 wird mit ihrer Achse entgegen der Brieftransportrichtung so weit verstellt und letztere dann arretiert, daß der Transportriemen 41 ausreichend straff gespannt ist.
Um mit zwei Umlenkrollen 42, 43 auszukommen und die Transportriemenspannung schonend einzustellen und trotzdem einen kontinuierlichen und harmonischen Brieflauf zu gewährleisten, ist unter dem oberen, die Brieflast tragenden Riemenbereich noch eine Stützplatte 46 vorgesehen. Der Transportriemen 41 gleitet bei größerer Last auf der Stützplatte 46 entlang, deren Oberfläche entsprechend glatt ausgeführt ist.
Die Antriebsrolle 44 ist über ein geeignetes Getriebe - das kann sowohl ein Zahnradgetriebe als auch ein Riemengetriebe sein - mit einem Motor 49 verbunden.

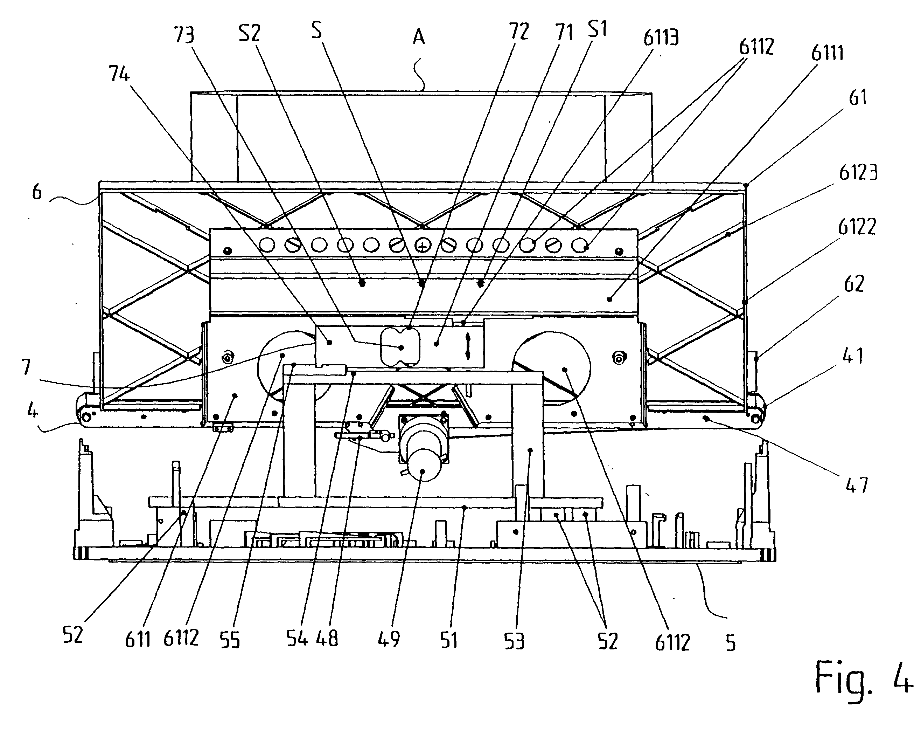

Gemäß Fig. 3 und 4 sind alle Rollen 42, 43, 44, 45 der Transporteinrichtung 4 zwischen zwei langgestreckten Tragblechen 47 gelagert. Die Tragbleche 47 bestimmen die Länge der Transporteinrichtung 4, siehe auch Fig.2.
An den Tragblechen 47 ist außerdem eine Spannvorrichtung 48 für die Spannrolle 45 befestigt.
An dem vorderen Tragblech 47 ist weiterhin die Vorderwand 62 des Wiegetellers 6 befestigt. Es wäre auch möglich, beide zusammen als ein Teil auszuführen.

Analog ist an dem hinteren Tragblech 47 die Stützplatte 46 für den Transportriemen befestigt. Auch hier wäre es möglich, beide erstgenannten Teile zusammen als ein Teil auszuführen.
Die Transporteinrichtung 4 ist mit dem hinteren Tragblech 47 an der Rückwand 61 des Wiegetellers 6 so befestigt, daß der Motor 49 und die Antriebsrolle 44 nahe unterhalb des gemeinsamen Schwerpunktes S angeordnet sind.

Der gemeinsame Schwerpunkt S ist der resultierende Schwerpunkt aus dem Schwerpunkt SW des Wiegetellers 6 und dem Schwerpunkt SB des schwersten und größten zulässigen Briefes A, wenn dieser in der Mitte des Wiegetellers 6 angeordnet ist.

Eine Grundplatte 51 ist mit dem Chassis 5 über Distanzstücke 52 verbunden und zu letzterer parallel angeordnet. Die Distanzstücke 52 können zwecks Schwingungsdämpfung als Silentblöcke ausgeführt sein.
Die Rückwand 61 des Wiegetellers 6 ist aus einer Führungsplatte 612 für den Brief und einer mit dieser rückseitig verbundenen Tragplatte 611 zusammengesetzt.
Die Rückwand 61 könnte auch einstückig in Sandwichbauweise mit entsprechenden Krafteinleitungselementen realisiert sein.
Die Führungsplatte 612 ist kastenförmig ausgeführt. Die Vorderseite ist im wesentlichen glatt gestaltet und mit horizontal verlaufenden Gleitrippen 6121 für den Brief A versehen. Die Rückseite weist einen umlaufenden Kragen 6122 und zueinander diagonal verlaufende Stege 6123 auf, wodurch eine hohe Formstabilität erzielt wird.
Die Führungsplatte 612 besteht vorzugsweise aus einem Konstruktionsplast, wie Acrylnitril-Butadien-Styrol (ABS).
Die Tragplatte 611 ist in den mechanisch geringer belasteten Bereichen mit Ausnehmungen 6112 versehen, um Material und damit Gewicht einzusparen.
In horizontaler Erstreckung weist die Tragplatte 611 eine durchgängig nach außen geprägte Schulter 6111 auf.
Mit dieser Schulter 6111 ist die Tragplatte 611 und damit der gesamte Wiegeteller 6 über ein flaches zwischengefügtes T-Stück 6113 so auf dem freien Ende 71 einer Wiegezelle 7 befestigt, daß der gemeinsame Schwerpunkt S geringfügig oberhalb des sensiblen Bereiches 72 der Wiegezelle 7 liegt.

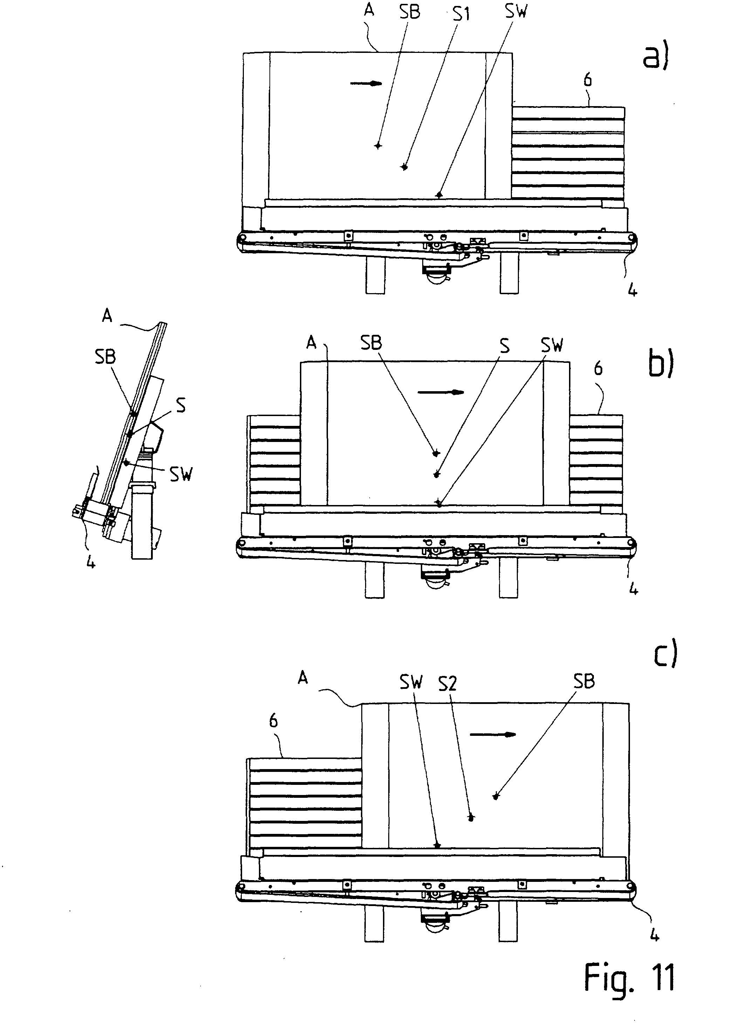

Der gemeinsame Schwerpunkt S1 ist der resultierende Schwerpunkt aus dem Schwerpunkt SW des Wiegetellers 6 und dem Schwerpunkt SB des Briefes A, wenn dieser auf den Wiegeteller 6 eingangsseitig so weit gelangt ist, daß der Meßprozeß beginnen kann.
Der gemeinsame Schwerpunkt S2 ist der resultierende Schwerpunkt aus dem Schwerpunkt SW des Wiegetellers 6 und dem Schwerpunkt SB des Briefes A, wenn dieser auf dem Wiegeteller 6 ausgangsseitig so weit gekommen ist, daß der Meßprozeß beendet werden muß, siehe hierzu auch Fig. 11.
Der sensible Bereich 72 der Wiegezelle 7 ist der durch die Last am stärksten beeinflußte Bereich.
Die Wiegezelle 7 weist in ihrem Mittenbereich eine durchgehende Ausnehmung 73 auf. Die verbleibenden Wandstücke wirken wie eine Parallelogrammführung für das freie Ende 71 der Wiegezelle 7, so daß dieses unter wechselndem Lasteinfluß eine annähernd vertikale Bewegung entsprechend den gezeigten Pfeilrichtungen ausführt. Der Hub des freien Endes 71 liegt hierbei im Mikrometerbereich.
Auf dem obenliegenden Wandstück, das dem sensiblen Bereich 72 entspricht, sind an den schwächsten Stellen Wandler befestigt, beispielsweise Dehnungsmeßstreifen. Bei Belastung werden das Wandstück verformt und infolgedessen die Dehnungsmeßstreifen gespannt und deren Widerstandswert verändert. Die Widerstandsänderung wird in einer angeschlossenen elektrischen Schaltung als Gewichtsmaß ausgewertet.
Das feste Ende 74 der Wiegezelle 7 ist über einen Adapter 55 auf einer Traverse 54 befestigt, die auf zwei Säulen 53 gelagert ist, die wiederum auf der Grundplatte 51 befestigt sind, siehe auch Fig. 5.

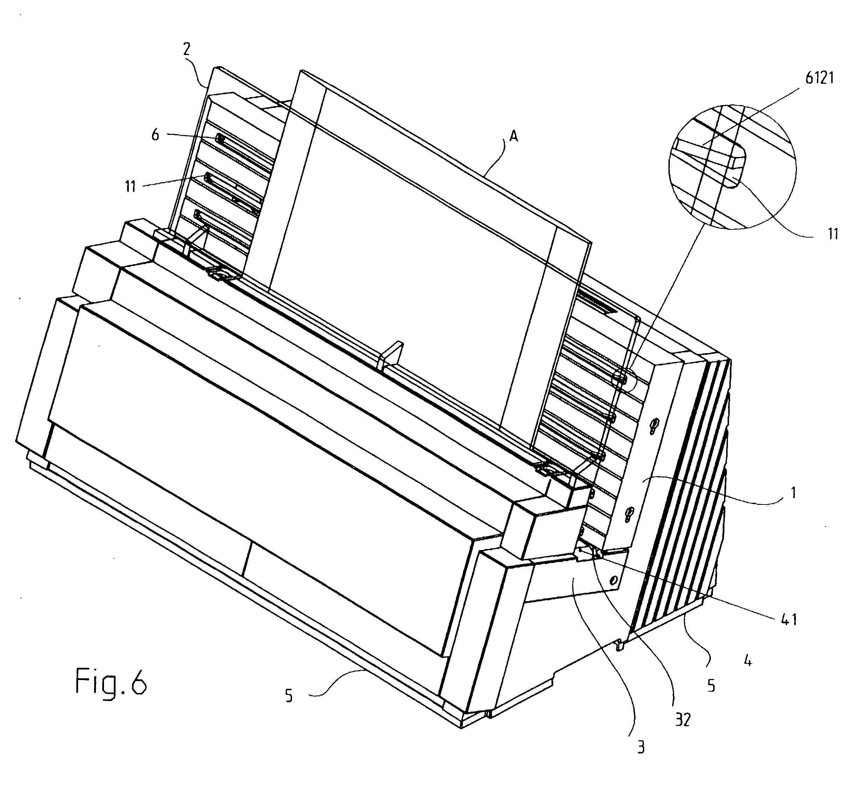

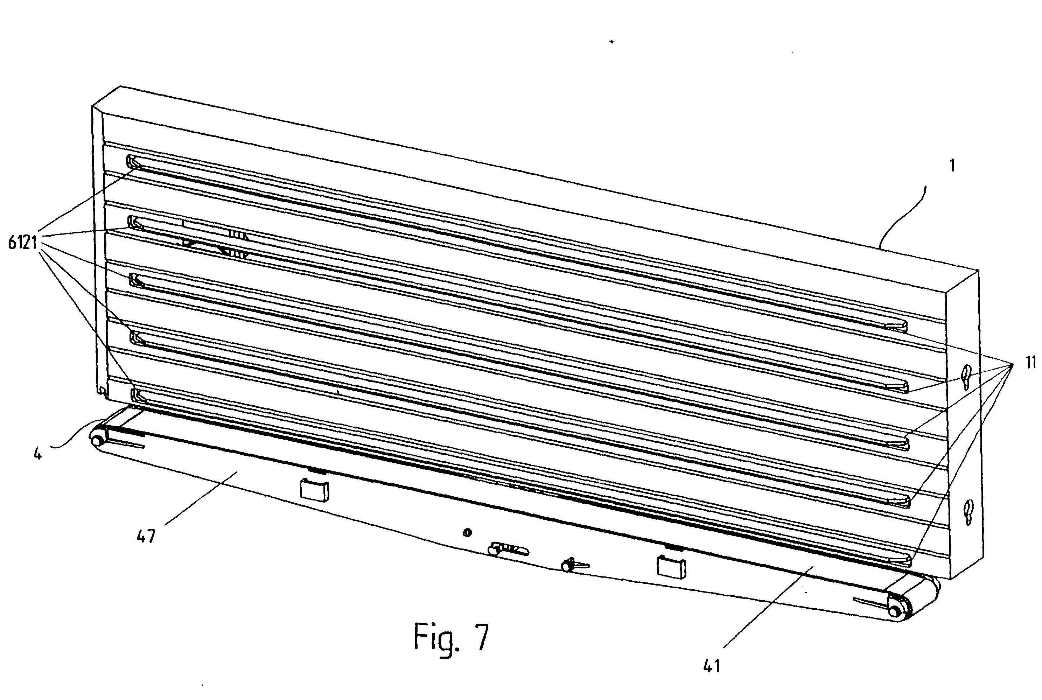

In Fig. 6 ist eine Waage dargestellt, bei der die Rückwand 61 des Wiegetellers 6 überwiegend hinter der hinteren Führungswand 1 der Waage angeordnet ist. Die Rückwand 61 ragt mit ihren horizontal verlaufenden vorstehenden Gleitrippen 6121 durch diesen angepaßte Ausnehmungen 11 der hinteren Führungswand 1, siehe auch Fig. 7, 9 und 10. Die Ausnehmungen 11 sind in ihrer Höhenausdehnung geringfügig größer bemessen als der größte Hub des Wiegetellers 6.
Die Rückwand 61 des Wiegetellers 6 ist hinter der hinteren Führungswand 1 der Waage so angeordnet und mit ihren Gleitrippen 6121 in die Ausnehmungen 11 der Führungswand 1 so eingelassen, daß die Rückwand 61 als Ganzes freigängig, parallel zur Führungswand 1 und mit dem vorderen Teil der Gleitrippen 6121 gegenüber der Vorderseite der Führungswand 1 so weit vorsteht, daß der Brief A mit seiner Breitseite nur die Gleitrippen 6121 berührt und nicht die Führungswand 1.

In Fig. 7 ist ersichtlich, wie die Transporteinrichtung 4 mit dem zwischen zwei Tragblechen 47 geführten Transportriemen 41 zur Führungswand 1 angeordnet ist.
Die schlitzförmigen Ausnehmungen 11 in der Führungswand 1 für die Gleitrippen 6121 verlaufen horizontal und sind zueinander äquidistant angeordnet.

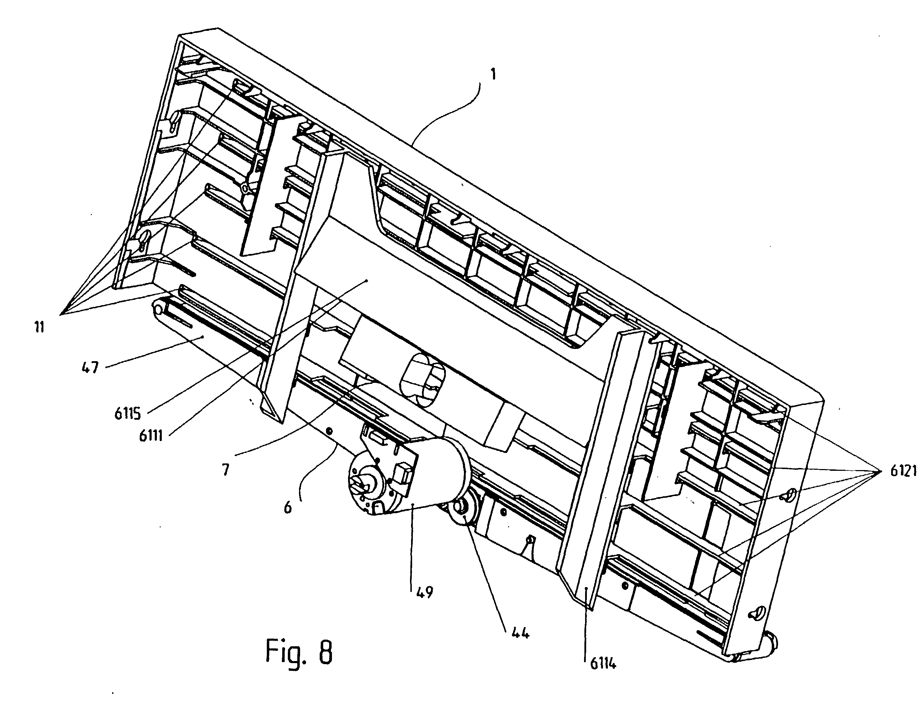

Wie in Fig. 8 erkennbar ist, ist die hintere Führungswand 1 der Waage in diesem Fall kastenförmig mit einem umlaufenden Rand 12 ausgeführt.

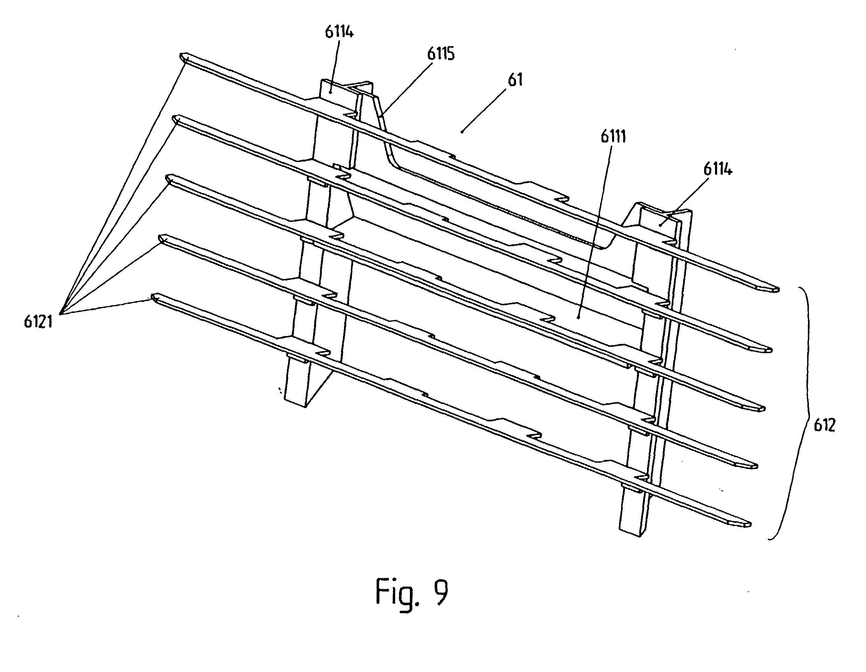

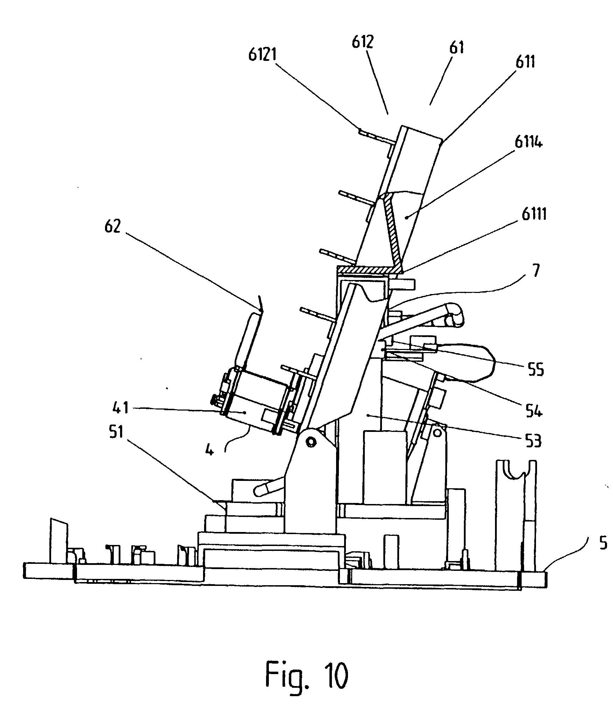

Gemäß Fig. 9 ist die Rückwand 61 des Wiegetellers 6 funktional aus einer Führungseinheit 612 für den Brief A und einer mit dieser rückseitig verbundenen Trageinheit 611 zusammengesetzt. Die Führungseinheit 612 wird durch die Gleitrippen 6121 gebildet. Die Trageinheit 611 besteht aus zwei T-Trägern 6114 und einer zwischen diesen angeordneten und mit diesen verbundenen, mehrfach abgewinkelten Platte 6115 mit einer Schulter 6111 zur Ankopplung an die Wiegezelle 7, siehe auch Fig. 8 und 10.
Die Gleitrippen 6121 sind an den Querstegen der T-Träger 6114 befestigt, wobei die T-Träger zu den Gleitrippen orthogonal angeordnet sind. Zur weiteren Erhöhung der Steifigkeit der Führungseinheit 612 können die Enden der Gleitrippen 6121 untereinander auch noch durch geeignete Querstücke verbunden sein.

Gemäß Fig. 10 ist die Wiegezelle 7 analog wie beim ersten Ausführungsbeispiel über einen Adapter 55 auf einer Traverse 54 befestigt, die wiederum auf der Grundplatte 51 befestigt ist. Die Grundplatte 51 ist unmittelbar mit dem Chassis der Waage verbunden.

In Fig. 11 sind die Verhältnisse zwischen Briefschwerpunkt SB und Wiegetellerschwerpunkt SW dargestellt.
Gemäß Fig. 11 a befindet sich der Brief A im Einlaufbereich, so daß sich der resultierende Schwerpunkt S1 gleichfalls links von der Mitte des Wiegetellers 6 befindet. Der zugehörige Lastarm entspricht dem orthogonalen Abstand zwischen resultierendem Schwerpunkt S1 und Wiegetellerschwerpunkt SW.
Gemäß Fig. 11 b befindet sich der Brief A genau in der Mitte des Wiegetellers 6, so daß alle drei Schwerpunkte SB, SW, S auf der Mittellinie des Wiegetellers 6 liegen und der Lastarm gleich Null ist.
Gemäß Fig. 11c befindet sich der Brief A im Auslaufbereich, so daß sich der resultierende Schwerpunkt S2 gleichfalls rechts von der Mitte des Wiegetellers 6 befindet. Der zugehörige Lastarm entspricht dem orthogonalen Abstand zwischen resultierendem Schwerpunkt S2 und Wiegetellerschwerpunkt SW.

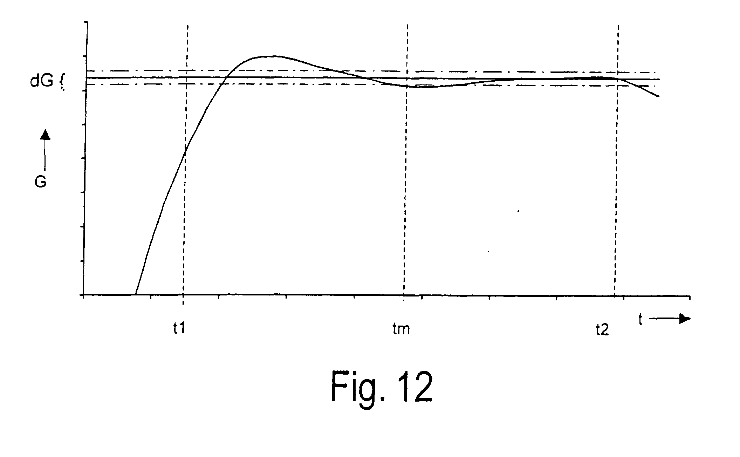

Gemäß Fig. 12 beginnt der Meßprozeß zum Zeitpunkt t1, bei dem der Schwerpunkt S1 wirksam ist und endet spätestens zum Zeitpunkt t2, bei dem der Schwerpunkt S2 wirksam ist. Zum Zeitpunkt tm wirkt entsprechend der Schwerpunkt S. Das Gewicht G wird mit einer zulässigen Abweichung von dG gemessen.

### Verwendete Bezugszeichen

- 1: hinterere Führungswand der Waage
- 11: Ausnehmung/en in hinterer Führungswand 1 für Wiegeteller 6 beziehungsweise für Gleitrippen 6121
- 12: Rand der Führungswand 1

- 2: vordere Abdeckplatte der Waage

- 3: untere Führungswand der Waage
- 31: Vorderende der Führungswand 3
- 32: Hinterende der Führungswand 3
- 33: Blattfeder am Vorderende 31

- 4: Transporteinrichtung
- 41: Transportriemen der Transporteinrichtung 4
- 42: vordere Umlenkrolle für Transportriemen 41
- 43: hintere Umlenkrolle für Transportriemen 41
- 44: Antriebsrolle für Transportriemen 41
- 45: Spannrolle für Transportriemen 41
- 46: Stützplatte für Transportriemen 42
- 47: Tragbleche der Transporteinrichtung
- 48: Spannvorrichtung für Spannrolle 45
- 49: Motor der Transporteinrichtung 4

- 5: Chassis der Waage 1
- 51: Grundplatte
- 52: Distanzstücke
- 53: Säulen
- 54: Traverse für Wiegezelle 7
- 55: Adapter für Wiegezelle 7

- 6: Wiegeteller
- 61: Rückwand des Wiegetellers 6
- 611: Tragplatte/Trageinheit der Rückwand 61
- 6111: Schulter an Tragplatte/Trageinheit 611
- 6112: Ausnehmungen in der Tragplatte 611
- 6113: T-Stück für Tragplatte 611
- 6114: T-Träger der Trageinheit 611
- 6115: Platte der Trageinheit 611
- 612: Führungsplatte/Führungseinheit der Rückwand 61
- 6121: Gleitrippen an der Vorderseite der Rückwand 61
- 6122: Kragen an der Rückseite der Rückwand 61
- 6123: Stege an der Rückwand 61
- 62: Vorderwand des Wiegetellers 6

- 7: Wiegezelle
- 71: freies Ende der Wiegezelle 7
- 72: sensibler Bereich der Wiegezelle 7
- 73: Ausnehmung in der Wiegezelle 7
- 74: festes, eingespanntes Ende der Wiegezelle 7

- A: Postgut, Briefe, Päckchen

- S: gemeinsamer Schwerpunkt des Wiegetellers 6 und des größten und schwersten Briefes A in Mittellage
- S1: gemeinsamer Schwerpunkt im Eingangsbereich
- S2: gemeinsamer Schwerpunkt im Ausgangsbereich
- SB: Schwerpunkt des Briefes
- SW: Schwerpunkt des Wiegetellers

## Patentansprüche

1. Vorrichtung zum Wiegen von bewegtem Postgut, insbesondere von auf einer Kante stehend angeordneten Briefen, **dadurch**
**gekennzeichnet dass**
• ein in Leichtbauweise biege- und verwindungssteif ausgeführter Wiegeteller (6) für das Postgut (A) vorgesehen ist, der am ungefähren Ort des gemeinsamen Schwerpunktes (S) des Wiegetellers (6) und eines mittig auf dem Wiegeteller (6) angeordneten Postgutes (A) mit dem höchstzulässigen Gewicht und den größten zulässigen Abmessungen an eine Wiegezelle (7) angekoppelt ist, und dass
• der Wiegeteller (6) eine Rückwand (61) zur Führung des Postgutes (A) und eine Transporteinrichtung (4) für das Postgut (A) aufweist die zugleich den Boden des Wiegetellers (6) bildet.

2. Vorrichtung nach Anspruch 1, **dadurch gekennzeichnet, daß** der Eingangsbereich zum Wiegeteller (6) so gestaltet ist, daß das Postgut (A) sowohl auf die Transporteinrichtung (4) als auch auf die Rückwand (61) weitgehend tangential auftrifft und
daß der Ausgangsbereich nach dem Wiegeteller (6) seitlich und nach unten so zurückgesetzt ist, daß das Postgut (A) beim Verlassen des Wiegetellers (6) im Ausgangsbereich zunächst frei in der Luft hängt.

3. Vorrichtung nach Anspruch 1, **dadurch gekennzeichnet, daß** die Transporteinrichtung (4) einen Transportriemen (41) aufweist, der den Boden des Wiegetellers (6) bildet.

4. Vorrichtung nach Anspruch 1, **dadurch gekennzeichnet, daß** die Rückwand (61) aus einer Führungsplatte (612) für das Postgut (A) und einer mit dieser rückseitig verbundenen Tragplatte (611) zusammengesetzt ist,
daß die Führungsplatte (612) kastenförmig ausgeführt ist, vorderseitig glatt, mit horizontal verlaufenden Gleitrippen (6121) für das Postgut (A) und rückseitig mit einem umlaufenden Kragen (6122) und mit zueinander diagonal verlaufenden Stegen (6123),
daß die Tragplatte (611) in den mechanisch geringer belasteten Bereichen mit Ausnehmungen (6112) versehen ist und in horizontaler Erstreckung durchgängig eine nach außen geprägte Schulter (6111) aufweist, die über ein flaches zwischengefügtes T-Stück (6113) auf dem freien Ende (71) der Wiegezelle (7) so befestigt ist, daß der gemeinsame Schwerpunkt (S) geringfügig oberhalb des sensiblen Bereiches (72) der Wiegezelle (7) liegt, wobei der sensible Bereich (72) der durch die Last am stärksten beeinflußte Bereich der Wiegezelle (7) ist.

5. Vorrichtung nach Anspruch 4, **dadurch gekennzeichnet, daß** die Führungsplatte (612) aus einem Material mit kleinem spezifischen Gewicht und großer Festigkeit besteht.

6. Vorrichtung nach Anspruch 5, **dadurch gekennzeichnet, daß** die Führungsplatte (612) aus Acrylnitril-Butadien-Styrol oder kohlefaserverstärktem Kunststoff besteht.

7. Vorrichtung nach Anspruch 4, **dadurch gekennzeichnet, daß** die Tragplatte (611) und das T-Stück (6113) aus extra hartem Duraluminium bestehen.

8. Vorrichtung nach Anspruch 1, **dadurch gekennzeichnet, daß** die Rückwand (61) skelettförmig gestaltet und hinter einer hinteren Führungswand (1) der Waage angeordnet und mit Gleitrippen (6121) für das Postgut (A) versehen ist, die durch angepaßte, horizontal verlaufende, schmale schlitzförmige Ausnehmungen (11) ragen.

9. Vorrichtung nach Anspruch 8, **dadurch gekennzeichnet, daß** die Rückwand (61) funktionell aus einer Führungseinheit (612) für das Postgut (A) und einer mit dieser rückseitig verbundenen Trageinheit (611) zusammengesetzt ist, wobei die Führungseinheit (612) durch die zueinander parallel und äquidistant angeordneten Gleitrippen (6121) gebildet wird.

10. Vorrichtung nach Anspruch 8 bis 9, **dadurch gekennzeichnet,**
**daß** die Ausnehmungen (11) in der Höhe größer sind als das Summenmaß aus der Dicke der Gleitrippen (6121) und dem maximalen Hub des Wiegetellers (6),
**daß** die Trageinheit (611) aus zwei T-Trägem (6114) und einer zwischen diesen angeordneten und mit diesen verbundenen Platte (6115) mit einer Schulter (6111) besteht, die so an eine Wiegezelle (7) angekoppelt ist, daß der gemeinsame Schwerpunkt (S) geringfügig oberhalb des sensiblen Bereiches der Wiegezelle (7) liegt, wobei der sensible Bereich der durch die Last am stärksten beeinflußte Bereich der Wiegezelle (7) ist.

11. Vorrichtung nach Anspruch 9 und 10, **dadurch gekennzeichnet,**
**daß** die Gleitrippen (6121) an den Querstegen der T-Träger (6114) und orthogonal zu diesen angeordnet sind.

12. Vorrichtung nach Anspruch 1, **dadurch gekennzeichnet,**
**daß** die Rückwand (61) einstückig in Sandwichbauweise mit mindestends einem zentralen Krafteinleitungselement ausgeführt ist, mit dem die Rückwand auf dem freien Ende (71) der Wiegezelle (7) so befestigt ist, daß der gemeinsame Schwerpunkt (S) geringfügig oberhalb des sensiblen Bereiches (72) der Wiegezelle (7) liegt.

13. Vorrichtung nach Anspruch 12, **dadurch gekennzeichnet,**
**daß** die Rückwand (61) aus einem geschlossenporigen, hartverschaltem Polystyrolschaumstoff und einem Krafteinleitungselement aus einem extra harten Duraluminium besteht.

14. Vorrichtung nach Anspruch 1 bis 2, **dadurch gekennzeichnet,**
**daß** der Wiegeteller (6) im Querschnitt gesehen u-förmig ist, wobei die Transporteinrichtung (4) dessen Boden bildet und dessen Vorderwand (62) im Vergleich zur parallelen tragenden Rückwand (61) niedriger aber so hoch ist, daß die Umschlagklappe eines offenen Postgutes (A) nur an der Vorderwand (62) anliegt,
**daß** die Vorderwand (62) im Eingangsbereich etwas nach vorn gebogen ist,
**daß** die Rückwand (61) über die Senkrechte hinaus leicht nach hinten geneigt ist und
**daß** der Transportriemen (41) orthogonal zur Rückwand (61) liegt.

15. Vorrichtung nach Anspruch 14, **dadurch gekennzeichnet,**
**daß** die Rückwand (61) um 18° geneigt ist.

16. Vorrichtung nach Anspruch 1, 2 und 14, **dadurch gekennzeichnet,**
**daß** die Transporteinrichtung (4) neben dem Transportriemen (41) eine Stützplatte (46) für diesen im Postgutlast tragenden Riemenbereich, eine vordere und eine hintere Umlenkrolle (42, 43), eine Spannrolle (45) und eine ungefähr mittig angeordnete Antriebsrolle (44) sowie einen mit letzterer kinematisch gekoppelten Motor (49) aufweist,
**daß** die Spannrolle (45) mittels einer Spannvorrichtung (48) entgegen der Postguttransportrichtung verstellbar und arretierbar ist und
**daß** alle Rollen (42, 43, 44, 45) der Transporteinrichtung (4) zwischen zwei langgestreckten Tragblechen (47) gelagert sind, wobei an dem vorderen Tragblech (47) die Vorderwand (62) des Wiegetellers (6) und an dem hinteren Tragblech (7) die Stützplatte (46) befestigt ist und
**daß** die Transporteinrichtung (4) mit dem hinteren Tragblech (47) an der Rückwand (61) des Wiegetellers (6) so befestigt ist, daß der Motor (49) und die Antriebsrolle (44) nahe unterhalb des gemeinsamen Schwerpunktes (S) angeordnet sind.

17. Vorrichtung nach Anspruch 1 und 16, **dadurch gekennzeichnet,**
**daß** mit geringem Abstand und parallel zur Vorderwand (62) des Wiegetellers (6) eine vordere Abdeckplatte (2) vorgesehen ist, die über die gesamte Länge der Waage erstreckt und mindestens so hoch wie die Rückwand (61) des Wiegetellers (6) ist.

## Claims

1. An appliance for the weighing of moving postal items, in particular of letters standing on an edge, **characterized in that:**
• a weighing plate (6) of a rigid and torsionally stiff lightweight construction provided for the postal item (A) is coupled to a weighing cell (7) approximately at the joint centre of gravity (S) of the weighing plate (6) and of a postal item (A) having the highest- permissible weight and the highest-permissible dimensions that is centrally arranged on the weighing plate (6); and that
• the weighing plate (6) has a back wall (61) for guiding the postal item (A) and a transport means (4) for the postal item (A) that at the same time forms the bottom of the weighing plate (6).

2. An appliance according to claim 1, **characterized in that** the inlet area to the weighing plate (6) is designed in such a manner that the postal item (A) hits both the transport device (4) and the back wall (61) tangentially to a large extent; and
that the outlet area following the weighing plate (6) is recessed laterally and downward in such a manner that the postal item (A), when leaving the weighing plate (6), is hanging freely in the air first.

3. An appliance according to claim 1, **characterized in that** the transport device (4) includes a transport belt (41) that forms the bottom of the weighing plate (6).

4. An appliance according to claim 1, **characterized in that** the back wall (61) is composed of a guide plate (612) for the postal item (A) and a carrying plate (611) connected with it on the back side;
that said guide plate (612) is of a box-shaped design with an even front side, with horizontally arranged sliding ribs (6121) for the postal item (A) and, on the back side, with a continuous collar (6122) and with webs (6123) diagonally arranged in relation to one another (6123);
that the carrying plate (611) is provided with recesses (6112) in the mechanically less loaded areas and has, in its horizontal extension, has a continuous outward-formed shoulder (6111) that, by means of an inserted flat T-piece (6113), is fixed to the free end (71) of the weighing cell (7) in such a manner that the joint centre of gravity (S) is located slightly above the sensitive area (72) of the weighing cell (7), the sensitive area (72) being the area of the weighing cell (7) most influenced by the load.

5. An appliance according to claim 4, **characterized in that** the guide plate (612) is made of a material having a low specific weight and a high strength.

6. An appliance according to claim 5, **characterized in that** the guide plate (612) is made of acrylonitrile butadiene styrene or carbon fibre-reinforced plastic.

7. An appliance according to claim 4, **characterized in that** the carrying plate (611) and the T-piece (6113) are made of extremely hard duralumin.

8. An appliance according to claim 1, **characterized in that** the back wall (61) is of a skeletal design and arranged behind a rear guide wall (1) of the scale and is provided with sliding ribs (6121) for the postal item (A), said ribs projecting out of horizontally arranged narrow slotted recesses (11).

9. An appliance according to claim 8, **characterized in that** the back wall (61) is functionally composed of a guide unit (612) for the postal item (A) and a carrying unit (611) connected with it on the back side, said guide unit (612) being formed by sliding ribs (6121) arranged in parallel to one another and at equal distances.

10. An appliance according to claims 8 to 9, **characterized in that** the height of the recesses (11) is larger than the sum of the thickness of the sliding ribs (6121) and the maximum stroke of the weighing plate (6);
that the carrying unit (611) is composed of two T-rests (6114) and a plate (6115) arranged between and connected to them having a shoulder (6111) that is coupled to the weighing cell (7) in such a manner that the joint centre of gravity (S) is located slightly above the sensitive area of the weighing cell (7), the sensitive area being the area of the weighing cell (7) most influenced by the load.

11. An appliance according to claims 9 to 10, **characterized in that** the sliding ribs (6121) are arranged at the transverse webs of the T-rests (6114) and orthogonally to them.

12. An appliance according to claim 1, **characterized in that** the back wall (61) is designed as a single-piece sandwich construction with at least one central power-flow element by means of which the back wall is fixed to the free end (71) of the weighing cell (7) in such a manner that the joint centre of gravity (S) is located slightly above the sensitive area (72) of the weighing cell (7).

13. An appliance according to claim 12, **characterized in that** the back wall (61) is composed of a closed-pore, hard-cased polystyrene foam and a power-flow element made of extremely hard duralumin.

14. An appliance according to claims 1 to 2, **characterized in that** the weighing plate (6) has a U-shaped cross section, wherein the transport device (4) forms its bottom and its front wall (62) is lower than the parallel carrying back wall (61), but high enough so that the cover flap of an open postal item (A) will only lie against the front wall (62);
that the front wall (62) is bend a bit to the front in the inlet area;
that the back wall (61) is slightly inclined to the back beyond the vertical; and
that the transport belt (41) is arranged orthogonally to the back wall (61).

15. An appliance according to claim 14, **characterized in that** the back wall (61) is inclined by 18°.

16. An appliance according to claims 1, 2 and 14, **characterized in that** the transport device (4), apart from the transport belt (41), comprises a support plate (46) for it in the belt area carrying a postal-item load, a front and a rear guide roller (42, 43) a tensioning roller (45) and an about centrally arranged driving roller (44) as well as a motor (49) kinematically coupled to the latter;
that the tensioning roller (46) is adjustable opposite to the postal-item transport direction and lockable by means of a tensioning device (48); and
that all rollers (42, 43, 44, 45) of the transport device (4) are borne between two stretched carrying plates (47), the front wall (62) of the weighing plate (6) being fixed to the front carrying plate (47) and the support plate (46) being fixed to the rear carrying plate (47); and
that the transport device (4) is fixed with the rear carrying plate (47) to the back wall (61) of the weighing plate (6) in such a manner that the motor (49) and the driving roller (44) are arranged closely below the joint centre of gravity (S).

17. An appliance according to claims 1 and 16, **characterized in that**, in a low distance and parallel to the front wall (62) of the weighing plate (6), there is provided a front cover plate (2) that extends over the entire length of the scale and is at least as high as the back wall (61) of the weighing plate (6).

## Revendications

1. Dispositif pour le pesage d'objets postaux en mouvement, en particulier de lettres disposées verticalement sur un bord **caractérisé :**
• **en ce qu'**un plateau de pesée (6) réalisé selon un mode de construction légère, rigide et résistante à la torsion est prévu pour l'objet postal (A), ledit plateau de pesée (6) étant couplé à la cellule de pesage (7) à l'endroit approximatif du centre de gravité commun (S) du plateau de pesée (6) et d'un objet postal (A) disposé de manière centrale sur le plateau de pesée (6) au poids et aux dimensions maximums autorisés,
• et **en ce que** le plateau de pesée (6) comporte une paroi arrière (61) pour le guidage de l'objet postal (A) et un dispositif de transport (4) pour l'objet postal (A) qui constitue en même temps le fond du plateau de pesée (6).

2. Dispositif selon la revendication 1 **caractérisé en ce que** la zone d'entrée vers le plateau de pesée (6) est réalisée de telle manière que l'objet postal (A) heurte grande partie de manière tangentielle aussi bien sur le dispositif de transport (4) que sur la paroi arrière (61),
et **en ce que** la zone de sortie après le plateau de pesée (6) est si reculée latéralement et vers le bas que lorsque l'objet postal (A) quitte le plateau de pesée (6) dans la zone de sortie, il se trouve d'abord en suspension libre.

3. Dispositif selon la revendication 1 **caractérisé en ce que** le dispositif de transport (4) comporte une courroie de transport (41) qui forme le fond du plateau de pesée (6).

4. Dispositif selon la revendication 1 **caractérisé en ce que** la paroi arrière (61) est composée d'une plaque de guidage (612) pour l'objet postal (A) et d'une plaque d'appui (611) reliée à l'arrière de ladite plaque de guidage,
**en ce que** la plaque de guidage (612) est réalisée en forme de caisson, ladite plaque de guidage étant lisse à l'avant avec des nervures de glissement horizontales (6121) pour l'objet postal (A) et munie à l'arrière d'un collet annulaire (6122) et d'âmes diagonales les unes par rapport aux autres (6123),
**en ce que** la plaque d'appui (611) est pourvue de creux (6112) dans les zones soumises à de faibles contraintes mécaniques et comporte tout le long, dans son étendue horizontale, un épaulement (6111) marqué vers l'extérieur, lequel est fixé sur l'extrémité libre (71) de la cellule de pesage (7) au-dessus d'une pièce en té plate intermédiaire (6113), de telle manière que le centre de gravité commun (S) se trouve légèrement au-dessus de la zone sensible (72) de la cellule de pesage (7), la zone sensible (72) étant la zone de la cellule de pesage (7) la plus fortement influencée par la charge.

5. Dispositif selon la revendication 4 **caractérisé en ce que** la plaque de guidage (612) est composée d'un matériau au poids faible spécifique et très résistant.

6. Dispositif selon la revendication 5 **caractérisé en ce que** la plaque de guidage (612) est composée de résine acrylonitrile-butadiène-styrène ou de plastique renforcé par de la fibre de carbone.

7. Dispositif selon la revendication 4 **caractérisé en ce que** la plaque d'appui (611) et la pièce en té (6113) sont composées de duralumin extra dur.

8. Dispositif selon la revendication 1 **caractérisé en ce que** la paroi arrière (61) est conçue en forme de squelette et disposée derrière une paroi de guidage arrière (1) de la balance et pourvue de nervures de glissement (6121) pour l'objet postal (A), lesdites nervures de glissement s'élevant à travers des creux (11) horizontaux fins appropriés en forme de fente.

9. Dispositif selon la revendication 8 **caractérisé en ce que** la paroi arrière (61) est composée de manière fonctionnelle d'une unité de guidage (612) pour l'objet postal (A) et d'une unité d'appui (611) reliée à l'arrière de ladite unité de guidage (612), cette dernière étant formée par les nervures de glissement (6121) disposées de manière équidistante et parallèle les unes par rapport aux autres.

10. Dispositif selon l'une quelconque des revendications 8 à 9
**caractérisé en ce que**
les creux (11) ont une hauteur supérieure à la somme de l'épaisseur des nervures de glissement (6121) et la course maximale du plateau de pesée (6),
**en ce que** l'unité d'appui (611) est composée de deux poutres en T (6114) et d'une plaque (6115) disposée entre lesdites poutres en T et reliée à celles-ci et pourvue d'un épaulement (6111) couplé à une cellule de pesage (7) de telle manière que le centre de gravité commun (S) se trouve légèrement au-dessus de la zone sensible de la cellule de pesage (7), la zone sensible étant la zone de la cellule de pesage (7) la plus fortement sollicitée.

11. Dispositif selon l'une quelconque des revendications 9 et 10
**caractérisé en ce que**
les nervures de glissement (6121) sont disposées sur les âmes transversales des poutres en T (6114) et de manière orthogonale par rapport à ces dernières.

12. Dispositif selon la revendication 1 **caractérisé en ce que** la paroi arrière (61) est réalisée de manière monobloc selon un mode de construction en sandwich avec au moins une pièce d'introduction de force centrale avec laquelle la paroi arrière est fixée sur l'extrémité libre (71) de la cellule de pesage (7) de telle manière que le centre de gravité commun (S) se trouve légèrement au-dessus de la zone sensible (72) de la cellule de pesage (7).

13. Dispositif selon la revendication 12 **caractérisé en ce que** la paroi arrière (61) est composée de mousse polystyrène aux pores fermés et au revêtement dur et d'une pièce d'introduction de force en duralumin extra dur.

14. Dispositif selon l'une quelconque des revendications 1 à 2 **caractérisé en ce que**
le plateau de pesée (6) vu de profil a la forme d'un U, le dispositif de transport (4) formant son fond, et sa paroi avant (62) étant plus basse par rapport à la paroi arrière (61) d'appui parallèle mais si haute que le volet de rabattement d'un objet postal (A) ouvert s'applique seulement à la paroi avant (62),
**en ce que** dans la zone d'entrée, la paroi avant (62) est légèrement courbée vers l'avant,
**en ce que** la paroi arrière (61) est légèrement inclinée vers l'arrière au-delà de la verticale,
et **en ce que** la courroie de transport (41) est orthogonale par rapport à la paroi arrière (61).

15. Dispositif selon la revendication 14 **caractérisé en ce que** la paroi arrière (61) est inclinée de 18°.

16. Dispositif selon l'une quelconque des revendications 1, 2 et 14 **caractérisé en ce que**
le dispositif de transport (4) comporte, près de la courroie de transport (41), une plaque d'appui (46) pour cette zone de courroie supportant la charge de l'objet postal, une poulie de renvoi avant et arrière (42, 43), une poulie de tension (45) et un rouleau entraîneur (44) disposé de manière à peu près centrale, ainsi qu'un moteur (49) couplé audit rouleau entraîneur de manière cinématique,
**en ce que** la poulie de tension (45) peut être orientée et bloquée au moyen d'un dispositif de tension (48) à l'opposé de la direction de transport de l'objet postal,
et **en ce que** tous les rouleaux et poulies (42, 43, 44, 45) du dispositif de transport (4) sont logés entre deux longues tôles porteuses (47), la paroi avant (62) du plateau de pesée (6) étant fixée à la tôle porteuse avant (47) et la plaque d'appui (46) étant fixée à la tôle porteuse arrière (47)
et **en ce que** le dispositif de transport (4) est fixé à la paroi arrière (61) du plateau de pesée (6) avec la tôle porteuse (47) de telle manière que le moteur (49) et le rouleau entraîneur (44) sont disposés près l'un de l'autre sous le centre de gravité commun (S).

17. Dispositif selon l'une quelconque des revendications 1 à 16 **caractérisé en ce que**
une plaque de recouvrement avant (2) est prévue avec une petite distance et parallèle à la paroi avant (62) du plateau de pesée (6), ladite plaque de recouvrement avant s'étendant sur toute la longueur de la balance et étant au moins aussi haute que la paroi arrière (61) du plateau de pesée (6).
